(19) **Europäisches Patentamt European Patent Office Office européen des brevets**

(11) **EP 4 613 787 A1**

(12) **EUROPEAN PATENT APPLICATION**
published in accordance with Art. 153(4) EPC

(43) Date of publication:
**10.09.2025 Bulletin 2025/37**

(21) Application number: **23886130.6**

(22) Date of filing: **25.10.2023**

(51) International Patent Classification (IPC):
*C08F 220/18* (2006.01)   *C08F 220/44* (2006.01)
*C08F 212/08* (2006.01)   *C08L 33/06* (2006.01)
*C08L 101/00* (2006.01)

(52) Cooperative Patent Classification (CPC):
**C08F 212/08; C08F 220/18; C08F 220/44;
C08L 33/06; C08L 101/00**

(86) International application number:
**PCT/KR2023/016679**

(87) International publication number:
**WO 2024/096434 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.11.2022 KR 20220143361
23.10.2023 KR 20230142387**

(71) Applicant: **LG CHEM, LTD.
Seoul 07336 (KR)**

(72) Inventors:
• **HONG, Sung Won
  Daejeon 34122 (KR)**
• **LEE, Dae Woo
  Daejeon 34122 (KR)**
• **JU, Min Cheol
  Daejeon 34122 (KR)**
• **LEE, Kwang Jin
  Daejeon 34122 (KR)**
• **SHIN, Min Seung
  Daejeon 34122 (KR)**
• **KIM, In Soo
  Daejeon 34122 (KR)**
• **SHIN, Chan Ho
  Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **COPOLYMER, METHOD FOR PRODUCING SAME, AND THERMOPLASTIC RESIN COMPOSITION COMPRISING SAME**

(57) The present invention relates to an acrylic-imide copolymer, which includes: an alkyl (meth)acrylate-based monomer unit; an aromatic vinyl-based monomer unit; and an imide-based monomer unit, wherein the copolymer includes a plurality of copolymer chains, a glass transition temperature is 109 °C to 133 °C, the imide-based monomer unit is included in an amount of 20 parts by weight or less based on 100 parts by weight of an entire copolymer, and a residual monomer content in the copolymer is 1.3 wt% or less. The copolymer has a small compositional variation and an appropriate level of glass transition temperature relative to an amount of imide-based monomers, thereby ensuring excellent heat resistance and transparency at the same time.

EP 4 613 787 A1

## Description

## Technical Field

[Cross-Reference to Related Application]

This application claims priority to and the benefit of Korean Patent Application No. 2022-0143361, filed on November 01, 2022, and Korean Patent Application No. 2023-0142387, filed on October 23, 2023, the entire contents of which are incorporated herein by reference.

[Technical Field]

The present invention relates to an acrylic-imide copolymer with a high glass transition temperature despite a small amount of imide-based monomer.

## Background Art

With the development of optical technology in recent years, liquid crystal displays have been required to be thinner, lighter, and larger in the display industry, and in particular, technologies related to wide viewing angle, high contrast, uniform screen display, inhibiting image changes depending on viewing angle, and the like have become a critical issue. Therefore, the required properties of polymer materials for displays are becoming more sophisticated.

Various display technologies such as plasma displays (PDPs), liquid crystal displays (LCDs), and organic EL displays (LEDs) that replace conventional cathode ray tubes (CRTs) have been proposed and commercialized. Meanwhile, various polymer films such as polarizing films, polarizer protective films, retardation films, light guide plates, and plastic substrates are used in these display devices, and the required properties of the polymer material for these displays are becoming more sophisticated.

Currently, the most commonly used display polymer film is a polarizer protective film, tri-acetyl cellulose (TAC), but when used for a long time in high temperatures or high humidity atmospheres, the TAC film has problems such as a decrease in polarization degree, separation of the polarizer from the film, or a reduction in optical properties. To solve these problems, polymer films based on methyl methacrylate, polystyrene, or polycarbonate have been proposed. These polymer films have excellent heat resistance, but in the case of polystyrene or polycarbonate films, aromatic rings in the polymer cause birefringence during orientation, which adversely affects optical properties, and in the case of methyl methacrylate, although its retardation value is relatively small compared to polystyrene or polycarbonate, it is not sufficient by itself to be applied to optical materials requiring high precision.

In order to solve these problems, previous research has been conducted on copolymerizing methyl methacrylate with various types of monomers, and among them, copolymerization with styrene and maleic anhydride is known to help increase heat resistance. However, since copolymers with maleic anhydride have stability problems during molding and their high molding temperatures cause problems such as decomposition and gel formation, there are limitations on their use.

In addition, cyclohexyl maleimide is an environmentally regulated substance, and in particular, when a resin composition was extruded into a film, cyclohexyl maleimide remaining in the resin caused an irritating and harmful odor, resulting in a reduction in production efficiency and process instability.

On the other hand, when phenylmaleimide was applied, phenylmaleimide caused a less irritating odor during film extrusion and had improved thermal stability, so there have been attempts to utilize phenylmaleimide. However, due to the difference in reactivity with other monomers, during polymerization, there is a significant difference in composition between the copolymer produced at the beginning of the process and the copolymer at the end of the process, and such imbalance in composition makes it difficult to ensure heat resistance and reduces transparency.

[Related Art Documents]

[Patent Documents]

(Patent Document 1) KR 1739621 B1

## Disclosure

## Technical Problem

The present invention is directed to providing an acrylic-imide copolymer that has a small compositional variation between copolymer chains by adding an imide-based monomer during polymerization and controlling reactivity among monomers, has an excellent glass transition temperature, and exhibits excellent transparency due to a low residual monomer content. In addition, the present invention is directed to providing a thermoplastic resin composition that has excellent heat resistance, impact strength, and transparency by including the copolymer.

**Technical Solution**

In order to solve the above-mentioned problems, the present invention provides an acrylic-imide copolymer, which includes: an alkyl (meth)acrylate-based monomer unit; an aromatic vinyl-based monomer unit; and an imide-based monomer unit, wherein the copolymer includes a plurality of copolymer chains, a glass transition temperature is 109 °C to 133 °C, the imide-based monomer unit is included in an amount of 14 parts by weight or less based on 100 parts by weight of the entire copolymer, and a residual monomer content in the copolymer is 1.3 wt% or less.

In addition, in order to solve the above-mentioned problems, the present invention provides a method of preparing an acrylic-imide copolymer including: initiating polymerization by adding a reaction solution, which includes an alkyl (meth)acrylate-based monomer and an aromatic vinyl-based monomer, to a reactor (S1); and performing polymerization while continuously adding a monomer solution, which includes an imide-based monomer, to the reactor (S2), wherein the monomer solution of step (S2) is continuously added after step (S1) until a polymerization conversion rate is 50% to 70%.

In addition, in order to solve the above-mentioned problems, the present invention provides a thermoplastic resin composition including the acrylic-imide copolymer described above.

**Advantageous Effects**

In the case of an acrylic-imide copolymer according to the present invention, reactivity can be controlled by adding an imide-based monomer, which has different reactivity from other monomers, during polymerization, thereby providing a copolymer with a small compositional variation between copolymer chains and a high glass transition temperature, and the copolymer can provide a transparent product with high heat resistance and high impact strength due to having excellent transparency when used in a molded product.

**Modes of the Invention**

Hereinafter, the present invention will be described in further detail to help in understanding the present invention.

Terms and words in this specification and claims should not be construed as limited to their conventional or dictionary meanings but should be construed as a meaning and concept consistent with the technical idea of the present invention based on the principle that the inventors can properly define the concept of terms in order to describe their invention in the best way.

Terms and measurement methods used in the present invention may be defined as follows, unless otherwise defined.

The term "composition" used in the present invention includes not only reaction products and decomposition products formed from the material of the composition, but also mixtures of materials including the composition.

The term "monomer unit" used in the present invention may be a repeating unit, which is formed when a compound used as a monomer or a compound used as a cross-linking agent participates in a polymerization or cross-linking reaction, a structure derived therefrom, or the substance itself.

The term "derivative" used in the present invention may be a compound having a structure in which one or more of the hydrogen atoms constituting the original compound are substituted with a halogen group, an alkyl group, or a hydroxy group.

**In** the present invention, "polymerization conversion rate" refers to the degree to which monomers are polymerized to form a polymer through a polymerization reaction. After collecting a portion of the polymer in the reactor during polymerization as a sample, the weight of the polymer excluding moisture is calculated through Equation 1 below, and then the sample is dissolved in a tetrahydrofuran (THF) solvent and precipitated with methanol (MeOH) to remove unreacted monomers, and the precipitated suspended solid is dried to measure the weight of the polymer, and the polymerization conversion rate is calculated using the following Equation 2.

(Actual weight of polymer) = (Weight of collected polymer) - (Weight of collected polymer X moisture content)                    [Equation 1]

Polymerization conversion rate (%) = [(Weight of polymer obtained by drying) / (Actual weight of polymer)] X 100     [Equation 2]

## Preparation method of acrylic-imide copolymer

According to the present invention, the acrylic-imide copolymer is a copolymer including: an alkyl (meth)acrylate-based monomer unit; an aromatic vinyl-based monomer unit; and an imide-based monomer unit, and the copolymer includes a plurality of copolymer chains, a glass transition temperature is 109 °C to 133 °C, the imide-based monomer unit is included in an amount of 20 parts by weight or less based on 100 parts by weight of the entire copolymer, and a residual monomer content in the copolymer is 1.3 wt% or less.

According to an embodiment of the present invention, the copolymer has a glass transition temperature of 109 °C to 133 °C, preferably 111 °C to 128 °C, more preferably 112 °C to 120°C. The glass transition temperature may be related to the content of the imide-based monomer unit, but even when the same content of imide-based monomer is used, the glass transition temperature may be slightly changed depending on a compositional variation between copolymer chains, compositions of other monomers, or the content of residual monomers, and the copolymer according to the present invention may have a high glass transition temperature even when the content of the imide-based monomer unit is low, such as 14 parts by weight or less.

A copolymer having a low glass transition temperature of less than 109 °C has an imbalance in monomer composition, which may cause problems with heat resistance, and a copolymer having a glass transition temperature above 133 °C may have discoloration due to poor transparency. When the imide-based monomer unit is included in an amount of 14 parts by weight or less in total, the glass transition temperature may be 133 °C or less, and when the imide-based monomer unit is included in an amount of 5 parts by weight or more, the glass transition temperature may be at least 109 °C, preferably 113 °C or more.

According to an embodiment of the present invention, the copolymer includes an imide-based monomer unit in an amount of 20 parts by weight or less based on 100 parts by weight of the copolymer. When the imide-based monomer unit exceeds 20 parts by weight, the copolymer may have a change in color and reduced transparency.

According to an embodiment of the present invention, the residual monomer content in the copolymer may be 1.3 wt% or less, preferably 1.2 wt% or less, more preferably 1.0 wt% or less. The residual monomer content is measured by gas chromatography, and the content may be high due to a difference in reactivity among monomers or because polymerization is terminated before reaching the final polymerization conversion rate for some reason, but in the case of the present invention, reactivity is controlled by adding imide-based monomers during polymerization, and therefore, while the polymerization conversion rate is high, the residual monomer content may be as low as 1.3 wt% or less. The residual monomer may be a total amount of residual aromatic vinyl-based monomers, alkyl (meth)acrylate-based monomers, and imide-based monomers.

According to an embodiment of the present invention, the copolymer may include: 40 parts by weight to 90 parts by weight of the alkyl (meth)acrylate-based monomer unit; 5 parts by weight to 50 parts by weight of the aromatic vinyl-based monomer unit; and 1 part by weight to 20 parts by weight of the imide-based monomer unit, based on 100 parts by weight of the entire copolymer. Within this range, the copolymer may have a desired level of glass transition temperature, an excellent level of transparency, and a small compositional variation among a plurality of polymer chains, so excellent impact strength and matte properties may be obtained at the same time.

Preferably, the copolymer may include: 50 parts by weight to 85 parts by weight or 60 parts by weight to 80 parts by weight of the alkyl (meth)acrylate-based monomer unit; 10 parts by weight to 40 parts by weight or 10 parts by weight to 30 parts by weight of the aromatic vinyl-based monomer unit; and 3 parts by weight to 15 parts by weight or 4 parts by weight to 10 parts by weight of the imide-based monomer unit, based on 100 parts by weight of the entire copolymer.

The copolymer may be a random copolymer and have a uniform composition of alkyl (meth)acrylate-based monomer units, aromatic vinyl-based monomer units, and imide-based monomer units in the copolymer. A uniform composition of the monomer units may mean that the proportion of each monomer unit that is present in the growing polymer, which is polymerized by the polymerization reaction of monomers, remains constant. In a specific example, as polymerization progresses, that is, over the polymerization time, whenever a portion of the polymer in the reactor is collected as a sample, the proportion of each monomer unit forming the polymer remains constant.

According to an embodiment of the present invention, the alkyl (meth)acrylate-based monomer unit, aromatic vinyl-based monomer unit, and imide-based monomer unit may be a repeating unit formed by each monomer participating in the polymerization reaction. As a specific example, the polymerization reaction may be a radical polymerization reaction and thus the repeating unit may be derived from carbon-carbon double bonds present in each monomer.

According to an embodiment of the present invention, the copolymer may further include a vinyl cyanide-based monomer unit. When the vinyl cyanide-based monomer unit is included, excellent mechanical properties such as impact strength and tensile strength may be stably secured, and due to improved flowability, there may be advantages in molding such as injection or extrusion.

According to the present invention, when the alkyl (meth)acrylate-based monomer unit is included in an amount of 45 parts by weight or more based on 100 parts by weight of the entire copolymer, a copolymer, in which the glass transition temperature and imide-based monomer unit content satisfy the following Mathematical Expression 1, is provided.

[Mathematical Expression 1]

$$2.0 \leq [(Tg) - 100] / [W_I] \leq 4.2$$

Tg is a unitless number of glass transition temperature when units are degrees Celsius (°C), and $W_I$ is a unitless number of the imide-based monomer unit content based on 100 parts by weight (or wt%) of the entire copolymer when units are parts by weight (or wt%).

The relationship between the glass transition temperature and the content of imide-based monomer unit may indicate that a compositional variation between copolymer chains is small, and a value less than 2.0 may indicate a highly non-uniform composition while a value greater than 4.2 may indicate that the glass transition temperature is too high relative to the imide-based monomer content, which may reduce impact strength. In other words, a copolymer within the above range may exhibit excellent transparency, heat resistance, and impact strength and have a low residual monomer content, and the range may be preferably 2.0 or more to 4.0 or less or 2.0 or more to 3.7 or less, more preferably 2.0 to 3.6.

The above relationship may be satisfied when the alkyl (meth)acrylate-based monomer unit is included in an amount of 45 parts by weight or more based on 100 parts by weight of the entire copolymer. In general, the glass transition temperature tends to increase as the aromatic vinyl-based monomer unit amount increases, and therefore, in order to understand the efficiency of adjusting the glass transition temperature by the imide-based monomer, the aromatic vinyl-based monomer unit amount should not be a major factor that affects the glass transition temperature and should satisfy this condition.

According to an embodiment of the present invention, the copolymer may have a compositional variation of imide-based monomer units in a plurality of chains of 3.50 or less. The compositional variation may be a standard deviation value for the composition of imide-based monomer units measured by collecting samples at least 4 times during polymerization using an elemental analysis method. When using the preparation method according to an embodiment of the present invention, the compositional variation of the imide-based monomer unit may be 3.50 or less, preferably 3.00 or less, more preferably 2.50 or less, and still more preferably 2.00 or less.

According to the present invention, a method of preparing an acrylic-imide copolymer includes: initiating polymerization by adding a reaction solution including an alkyl (meth)acrylate-based monomer and an aromatic vinyl-based monomer to a reactor (S1); and performing polymerization while continuously adding a monomer solution including an imide-based monomer to the reactor (S2), wherein the imide-based monomer is continuously added after step (S1) until a polymerization conversion rate is 50% to 70%.

According to an embodiment of the present invention, step (S1) is a step of initiating polymerization, which may include adding the reaction solution to the reactor and then increasing the temperature of the reactor to a predetermined temperature. When the internal temperature of the reactor is increased above the predetermined temperature even in step (S1), polymerization proceeds in the presence of a polymerization initiator, and according to an embodiment of the present invention, the reaction solution does not need to include an imide-based monomer. When the imide-based monomer included in the reaction solution participates in polymerization from the beginning, due to the high reactivity of the imide-based monomer, an excess amount of imide-based monomers may be incorporated into copolymer chains formed at the beginning of the process, and a relatively small amount of imide-based monomers may be incorporated into copolymer chains formed at the end of the process, which may cause an imbalance in composition between copolymer chains, resulting in a reduction in heat resistance and non-uniform physical properties for each sample and a large variation.

Therefore, in the preparation method according to an embodiment of the present invention, step (S1) may be performed without an imide-based monomer. In step (S1), the internal temperature of the reactor may be increased to about 60 °C to 120°C, preferably 70 °C to 110°C, more preferably 80 °C to 110°C, and still more preferably 85 °C to 105 °C. In the process of increasing the internal temperature of the reactor in step (S1), the point in time at which the initial temperature is reached may be the time when the polymerization conversion rate is below 10%, below 7%, below 5% or below 3%.

According to an embodiment of the present invention, the reaction solution includes an alkyl (meth)acrylate-based monomer, and the alkyl (meth)acrylate-based monomer may be one or more selected from the group consisting of methyl (meth)acrylate, ethyl (meth)acrylate, propyl (meth)acrylate, butyl (meth)acrylate, 2-ethylhexyl (meth)acrylate, decyl (meth)acrylate, and lauryl (meth)acrylate, and specifically, the alkyl (meth)acrylate-based monomer may be one or more selected from the group consisting of methyl methacrylate, ethyl methacrylate, butyl methacrylate, methyl acrylate, ethyl acrylate, and butyl acrylate.

According to an embodiment of the present invention, the alkyl (meth)acrylate-based monomer may be added in an amount of 40 parts by weight to 90 parts by weight, 50 parts by weight to 85 parts by weight, or 60 parts by weight to 80 parts by weight, based on a total amount of added monomers, and within this range, a copolymer with a high polymerization conversion rate may be obtained, and as the glass transition temperature is easily adjusted, excellent impact strength and transparency may be achieved.

According to an embodiment of the present invention, the reaction solution includes an aromatic vinyl-based monomer, and the aromatic vinyl-based monomer may be one or more selected from the group consisting of styrene, α-methylstyrene, α-ethylstyrene, p-methylstyrene, o-methylstyrene, o-t-butylstyrene, bromostyrene, chlorostyrene, trichlorostyrene, and derivatives thereof, and as a specific example, may be styrene.

The aromatic vinyl-based monomer may be added in an amount of 5 parts by weight to 50 parts by weight, 10 parts by weight to 40 parts by weight, or 10 parts by weight to 30 parts by weight, based on 100 parts by weight of the total amount of added monomers, and within this range, a copolymer with a high polymerization conversion rate may be obtained, and the mechanical properties of the copolymer may be maintained while controlling the glass transition temperature and improving the compatibility with a thermoplastic resin.

According to an embodiment of the present invention, the preparation method may be suspension polymerization, and in addition to monomers such as an alkyl (meth)acrylate monomer and aromatic vinyl-based monomer, the reaction solution may further include one or more polymerization additives such as a polymerization initiator, a dispersant, a dispersion aid, or a molecular weight regulator and may further include a polymerization solvent.

According to an embodiment of the present invention, the polymerization initiator is used to easily initiate polymerization and is not particularly limited as long as the polymerization initiator does not adversely affect polymerization, and may be, for example, one or more selected from the group consisting of 2,5-dimethyl-2,5-di(t-butylperoxy) hexane, di-(t-butylperoxy-isopropyl)benzene, t-butyl cumyl peroxide, di-(t-amyl)-peroxide, dicumyl peroxide, butyl 4,4-di(t-butylperoxy)valerate, t-butylperoxybenzoate, 2,2-di(t-butylperoxy)butane, t-amyl peroxy-benzoate, t-butylperoxy-acetate, t-butylperoxy-(2-ethylhexyl)carbonate, t-butylperoxy isopropyl carbonate, t-butyl peroxy-3,5,5-trimethyl-hexanoate, 1,1-di(t-butylperoxy)cyclohexane, t-amyl peroxyacetate, t-amylperoxy-(2-ethylhexyl)carbonate, 1,1-di(t-butylperoxy)-3,5,5-trimethylcyclohexane, 1,1-di(t-amylperoxy)cyclohexane, t-butyl-monoperoxy-maleate, and 1,1'-azobis(cyclohexanecarbonitrile), and specifically, one or more selected from the group consisting of dicumyl peroxide, 1,1-di(t-butyl peroxy)cyclohexane, and 1,1'-azobis(cyclohexane carbonitrile).

The polymerization initiator may be used in an amount of 0.001 parts by weight to 0.5 parts by weight, specifically 0.003 parts by weight to 0.45 parts by weight, or 0.06 parts by weight to 0.25 parts by weight, based on 100 parts by weight of the total amount of monomers used in polymerization, and when the polymerization initiator is used within this range, the polymerization reaction may be carried out more easily, and thus the polymerization conversion rate may be increased.

According to an embodiment of the present invention, the dispersant in suspension polymerization is an additive that allows a suspension to be better dispersed in a solvent and may be, for example, one or more selected from the group consisting of water-soluble polyvinyl alcohol, partially saponified polyvinyl alcohol, polyacrylic acid, a copolymer of vinyl acetate and maleic anhydride, hydroxypropyl methylcellulose, gelatin, calcium phosphate, tricalcium phosphate, hydroxyapatite, sorbitan monolaurate, sorbitan trioleate, polyoxyethylene, sodium lauryl sulfate, sodium dodecylbenzenesulfonate, and sodium dioctylsulfosuccinate and may be tricalcium phosphate as a specific example and may be the same as the dispersant added before initiating polymerization.

The dispersant may be used in an amount of 0.5 parts by weight to 2.0 parts by weight, 0.5 parts by weight to 1.5 parts by weight, or 1.0 part by weight to 1.5 parts by weight, based on 100 parts by weight of the total amount of added monomers, and within this range, a copolymer with more uniform particles may be prepared by increasing the dispersion stability of the monomers in the polymerization system.

According to an embodiment of the present invention, the reaction solution may further include a dispersion aid, and as a specific example, the dispersion aid may be polyoxyethylene alkyl ether phosphate or sodium sulfate ($Na_2SO_4$) and more specifically sodium sulfate ($Na_2SO_4$), and in this case, excellent polymerization stability may be achieved.

According to an embodiment of the present invention, the molecular weight regulator may be, for example, one or more selected from the group consisting of an α-methylstyrene dimer, t-dodecyl mercaptan, n-dodecyl mercaptan, octyl mercaptan, carbon tetrachloride, methylene chloride, methylene bromide, tetraethyl thiuram disulfide, dipentamethylene thiuram disulfide, and diisopropylxanthogen disulfide, and as a specific example, may be t-dodecyl mercaptan.

The molecular weight regulator may be used in an amount of 0.01 parts by weight to 0.40 parts by weight, 0.05 parts by weight to 0.30 parts by weight, or 0.10 to 0.25 parts by weight, based on 100 parts by weight of the total amount of added monomers, and within this range, a copolymer with an appropriate weight average molecular weight may be prepared.

According to an embodiment of the present invention, the above-described preparation method may be carried out in the presence of a water-soluble solvent as a solvent for initiating polymerization.

According to an embodiment of the present invention, the water-soluble solvent may be ion-exchanged water or deionized water. Meanwhile, according to an embodiment of the present invention, the monomer droplet may include a water-soluble solvent, and the water-soluble solvent may be ion-exchanged water or deionized water and may be the same as the water-soluble solvent added before initiating polymerization.

According to an embodiment of the present invention, an additional monomer may be further included to prepare a quaternary copolymer, and the additional monomer may be a vinyl cyanide-based monomer, which may be further included in the reaction solution to perform step (S1). The vinyl cyanide-based monomer may be one or more selected from the group consisting of acrylonitrile, methacrylonitrile, ethacrylonitrile, and derivatives thereof, and as a specific example, may be acrylonitrile.

The vinyl cyanide-based monomer may be added in an amount of 5 parts by weight to 70 parts by weight, 10 parts by weight to 60 parts by weight, 15 parts by weight to 50 parts by weight, or 15 parts by weight to 40 parts by weight, based on the total amount of added monomers, and within this range, a copolymer with a high polymerization conversion rate may be obtained, and compatibility with a thermoplastic resin may be excellent while maintaining mechanical properties of the copolymer.

According to an embodiment of the present invention, step (S2) is performed immediately after step (S1), and step (S2) includes performing polymerization while continuously adding a monomer solution including an imide-based monomer to the reactor, and the monomer solution is continuously added after step (S1) until the polymerization conversion rate is 50% to 70%.

According to an embodiment of the present invention, the monomer solution includes an imide-based monomer. Due to high reactivity, the imide-based monomer is easily incorporated into copolymer chains compared to other monomers such as the alkyl (meth)acrylate monomer and aromatic vinyl-based monomer, and when the reactivity is not properly controlled, a reduction in physical properties may occur due to an imbalance in composition between copolymer chains. Therefore, in the present invention, the monomer solution including the imide-based monomer is not added while the internal temperature of the reactor is increased but is added during polymerization after increasing the reactivity of other monomers by increasing the temperature.

The imide-based monomer is continuously added immediately after step (S1) until the polymerization conversion rate is 50% to 70%. The continuous addition may refer to adding a certain amount for a certain time at a constant rate or adding the monomer solution to the reactor at a constant flow rate. There are no limitations on the method for continuously adding the monomer solution as long as the monomer solution can be continuously added to the reactor at a constant flow rate (or speed).

According to an embodiment of the present invention, the continuous addition of the monomer solution in step (S2) is initiated immediately after step (S1) and terminated when the polymerization conversion rate is 50% to 70%, and immediately after step (S1) may mean after increasing the internal temperature of the reactor to a predetermined temperature, and in another sense, it may refer to the point in time before the polymerization conversion rate reaches about 10%, preferably 5%, as described above.

In addition, in terms of termination, when the continuous addition continues until the polymerization conversion rate exceeds 70%, imide-based monomers that are subsequently added may not participate in polymerization, which may cause an imbalance in composition between chains and an increase in residual monomer content, and thus the glass transition temperature may be lowered. When the continuous addition is terminated early before the polymerization conversion rate becomes 50%, an excess amount of imide-based monomers is incorporated into copolymer chains formed at the beginning, which may cause an imbalance in composition between chains. Therefore, continuously adding the monomer solution is preferably terminated when the polymerization conversion rate is 50% to 70% and may be preferably terminated when the polymerization conversion rate is 55% to 65%.

According to an embodiment of the present invention, the monomer solution includes an imide-based monomer, and the imide-based monomer may be a maleimide-based monomer and may be, as a specific example, a maleimide-based monomer in which hydrogen bonded to the N atom of the maleimide is substituted with a substituent. As a more specific example, the imide-based monomer may be one or more selected from the group consisting of N-methyl maleimide, N-ethyl maleimide, N-propyl maleimide, N-isopropyl maleimide, N-butyl maleimide, N-isobutyl maleimide, N-t-butyl maleimide, N-cyclohexyl maleimide, N-chlorophenyl maleimide, N-methylphenyl maleimide, N-bromophenyl maleimide, N-lauryl maleimide, N-hydroxyphenyl maleimide, N-methoxyphenyl maleimide, N-carboxyphenyl maleimide, N-nitrophenyl maleimide, N-phenyl maleimide, 2-methyl-N-phenyl maleimide, N-benzyl maleimide, N-naphthyl maleimide and derivatives thereof, and as a specific example, may be N-phenylmaleimide.

The imide-based monomer may be added in an amount of 1 part by weight to 20 parts by weight, 3 parts by weight to 15 parts by weight, or 4 parts by weight to 10 parts by weight, based on 100 parts by weight of the total amount of monomers added in step (S1) and step (S2), and within this range, a copolymer may be prepared with a high polymerization conversion rate and a balanced composition of monomer units, and the prepared copolymer may have excellent heat resistance.

According to an embodiment of the present invention, the monomer solution that is continuously added in step (S2) may further include one or more polymerization additives of a polymerization initiator, a dispersant, and a molecular weight regulator. When such polymerization additives are further included, the effect of adding the imide-based monomer separately after initiating polymerization may be maximized, and it may be much easier to control monomer reactivity or balance the composition between chains.

According to an embodiment of the present invention, after continuously adding the monomer solution in step (S2), polymerization may be performed through temperature control such as increasing the temperature to a predetermined temperature, maintaining the temperature at the predetermined temperature, and increasing or lowering the temperature to a predetermined temperature again. In this case, polymerization may be performed at a temperature range of 50 °C to 150 °C, preferably 60 °C to 130 °C, more preferably 65 °C to 120 °C by increasing, lowering, or maintaining the temperature. When polymerization is performed within this temperature range, the final polymerization conversion rate may be high and a copolymer with a balanced composition between copolymer chains and a desired level of physical properties may be preferably prepared.

**Thermoplastic resin composition**

A resin composition according to the present invention includes the above-described acrylic-imide copolymer. The resin composition may be prepared by mixing various resins depending on the desired use, for example, an acrylonitrile-butadiene-styrene-based resin, acrylonitrile-styrene-acrylate-based resin, styrene-acrylonitrile-based resin, and the like may be used together, and a resin obtained by copolymerization of the above-described resin with an alkyl (meth)acrylate-based monomer or a maleimide-based monomer may be utilized, but is not particularly limited thereto.

According to an embodiment of the present invention, if necessary, the resin composition may further include one or more additives selected from the group consisting of an impact modifier, a lubricant, a heat stabilizer, an anti-dripping agent, an antioxidant, a light stabilizer, an ultraviolet ray blocker, a pigment, and an inorganic filler, and the additive may be used in an amount of 5.0 parts by weight or less, or 0.1 parts by weight to 1.0 part by weight, based on 100 parts by weight of the copolymer and thermoplastic resin.

In addition, the additive may be used without particular limitation as long as it is used for the resin composition and, for example, the anti-dripping agent may be one or more selected from the group consisting of Teflon, polyamide, polysilicon, polytetrafluoroethylene (PTFE), and tetrafluoroethylene-hexafluoropropylene (TFE-HFP) copolymer to improve flame retardancy, and the inorganic filler may be one or more selected from the group consisting of barium sulfate, barium glass filler, and barium oxide.

**Molded product**

According to the present invention, a molded product including the above-described resin composition is provided. For example, the molded product may be used in various industrial fields such as electrical and electronic products and automobile components. As a molding method, commonly used methods including extrusion, injection, and casting may be applied, and for example, compared to a product in which a mold surface is corroded to provide a matte molded product, the molded product according to the present invention does not require corrosion treatment of the mold surface, and it is possible to provide a molded product having a matte and smooth surface in an injection-molded state without post-treatment of the molded product.

**Examples**

Hereinafter, examples of the present invention will be described in detail so that those skilled in the art can easily carry out the present invention. However, the present invention may be embodied in several different forms and is not limited to the examples described herein.

**Example 1**

150 parts by weight of ion-exchanged water, 75 parts by weight of methyl methacrylate, 20 parts by weight of styrene, 0.06 parts by weight of 1,1-di(t-butylperoxy)cyclohexane as a polymerization initiator, 0.05 parts by weight of a copolymer (copolymerization of acrylic acid and 2-ethylhexyl acrylate) having a weight average molecular weight of about 1,850,000 g/mol as a dispersant, 0.5 parts by weight of t-dodecylmercaptan (TDM) as a molecular weight regulator, and 0.5 parts by weight of $Na_2SO_4$ as a dispersion aid were uniformly mixed to prepare a reaction solution, and after putting the reaction solution into a reactor, the internal temperature of the reactor was increased to 100 °C to initiate polymerization. From the time when the internal temperature of the reactor reached 100 °C, 5 parts by weight of N-phenyl maleimide was continuously added at a constant rate of about 1.67 parts by weight/hr until the polymerization conversion rate was 50%. After terminating the continuous addition of the N-phenyl maleimide, polymerization was performed for another 60 minutes while the temperature of the reactor was maintained at 100 °C, and after increasing the temperature of the reactor to 120 °C at a constant rate for 30 minutes, polymerization was further performed for 90 minutes before terminating polymerization while the temperature was maintained at 120 °C. After polymerization was completed, the polymerization slurry was washed with water, dehydrated, and dried to prepare a bead-shaped copolymer.

Each part by weight is based on 100 parts by weight of the total amount of added monomers.

**Example 2**

A cross-linked copolymer was prepared in the same manner as in Example 1, except that 5 parts by weight of N-phenyl maleimide was continuously added at a constant rate of about 1.25 parts by weight/hr until the polymerization conversion rate was about 70%.

**Example 3**

A cross-linked copolymer was prepared in the same manner as in Example 1, except that 5 parts by weight of N-phenyl maleimide was continuously added at a constant rate of about 2.5 parts by weight/hr until the polymerization conversion rate was about 50%.

**Example 4**

A cross-linked copolymer was prepared in the same manner as in Example 1, except that 76 parts by weight of methyl methacrylate and 16 parts by weight of styrene were added to the reaction solution initially added to the reactor, and 8 parts by weight of N-phenyl maleimide was continuously added at a constant rate of about 2.67 parts by weight/hr until the polymerization conversion rate was about 65%.

**Example 5**

A cross-linked copolymer was prepared in the same manner as in Example 1, except that 76 parts by weight of methyl methacrylate and 11 parts by weight of styrene were added to the reaction solution initially added to the reactor, and 13 parts by weight of N-phenyl maleimide was continuously added at a constant rate of about 5.20 parts by weight/hr until the polymerization conversion rate was about 65%.

**Comparative Example 1**

A copolymer was prepared in the same manner as in Example 1, except that 100 parts by weight of methyl methacrylate was added as the sole monomer to the reaction solution, and the monomer solution was not added during polymerization.

**Comparative Example 2**

A copolymer was prepared in the same manner as in Example 1, except that 75 parts by weight of methyl methacrylate and 25 parts by weight of styrene were added as monomers to the reaction solution, and the monomer solution was not added during polymerization.

**Comparative Example 3**

A copolymer was prepared in the same manner as in Example 1, except that 75 parts by weight of methyl methacrylate, 20 parts by weight of styrene, and 5 parts by weight of N-phenylmaleimide were added as monomers to the reaction solution, and the monomer solution was not added during polymerization.

**Comparative Example 4**

A copolymer was prepared in the same manner as in Example 1, except that 75 parts by weight of methyl methacrylate, 4 parts by weight of styrene, and 21 parts by weight of N-phenylmaleimide were added as monomers to the reaction solution, and the monomer solution was not added during polymerization.

**Comparative Example 5**

150 parts by weight of ion-exchanged water, 75 parts by weight of methyl methacrylate, 20 parts by weight of styrene, 0.06 parts by weight of 1,1-di(t-butylperoxy)cyclohexane as a polymerization initiator, 0.05 parts by weight of a copolymer (copolymerization of acrylic acid and 2-ethylhexyl acrylate) having a weight average molecular weight of about 1,850,000 g/mol as a dispersant, 0.5 parts by weight of t-dodecylmercaptan (TDM) as a molecular weight regulator, and 0.5 parts by weight of $Na_2SO_4$ as a dispersion aid were uniformly mixed to prepare a reaction solution, and after putting the reaction solution into a reactor, the internal temperature of the reactor was increased to 100 °C to initiate polymerization. From the time when the internal temperature of the reactor reached 100 °C, 5 parts by weight of N-phenyl maleimide was continuously added at a constant rate of about 1.67 parts by weight/hr until the polymerization conversion rate was 50%. After terminating the continuous addition of the N-phenyl maleimide, polymerization was performed for another 60 minutes while the temperature of the reactor was maintained at 100 °C, and after increasing the temperature of the reactor to 120 °C at a constant rate for 30 minutes, polymerization was terminated when the polymerization conversion rate was 90%. After polymerization was completed, the polymerization slurry was washed with water, dehydrated, and dried to prepare a bead-shaped copolymer.

**Comparative Example 6**

150 parts by weight of ion-exchanged water, 75 parts by weight of methyl methacrylate, 20 parts by weight of styrene, 0.06 parts by weight of 1,1-di(t-butylperoxy)cyclohexane as a polymerization initiator, 0.05 parts by weight of a copolymer (copolymerization of acrylic acid and 2-ethylhexyl acrylate) having a weight average molecular weight of about 1,850,000 g/mol as a dispersant, 0.5 parts by weight of t-dodecylmercaptan (TDM) as a molecular weight regulator, and 0.5 parts by weight of $Na_2SO_4$ as a dispersion aid were uniformly mixed to prepare a reaction solution, and after putting the reaction solution into a reactor, the internal temperature of the reactor was increased to 100 °C to initiate polymerization. From the time when the internal temperature of the reactor reached 100 °C, 5 parts by weight of N-phenyl maleimide was continuously added at a constant rate of about 1.67 parts by weight/hr until the polymerization conversion rate was 50%. After terminating the continuous addition of the N-phenyl maleimide, polymerization was performed for another 4 hours while the temperature of the reactor was maintained at 100 °C, and polymerization was terminated when the polymerization conversion rate was 90%. After polymerization was completed, the polymerization slurry was washed with water, dehydrated, and dried to prepare a bead-shaped copolymer.

**Experimental Example 1**

For each copolymer prepared in Examples 1 to 5 and Comparative Examples 1 to 6, the glass transition temperature, residual monomer content, and transparency were measured by the following methods, and results thereof are shown in Table 1 below.

(1) Glass transition temperature (°C): After collecting 0.01 g samples from polymers and copolymers, each sample was heated from room temperature (20 °C to 25 °C) to 180 °C using a differential scanning calorimeter (DSC from Mettler Toledo) to remove foreign substances, and then each sample was cooled to room temperature (20 °C to 25 °C) and heated to 180 °C again to measure the glass transition temperature.

(2) Compositional variation: Samples were collected from each copolymer when polymerization was initiated and when the polymerization conversion rate was about 20%, 40%, 60%, and 80% after initiating polymerization and dissolved in tetrahydrofuran (THF), and then methanol was added to induce precipitation of a solid, and after removing the supernatant, the precipitate was measured to determine the content of imide-based monomer (N-phenyl maleimide) units in the copolymer through an elemental analyzer (Flash 2000) under the following measurement conditions, and the standard deviation was calculated using the measured values.

- 　N analysis: Reactor temperature 900 °C, oven temperature 65 °C, He carrier gas flow rate 140 mL/min, He reference gas flow rate 100 mL/min, $O_2$ flow rate 250 mL/min, $O_2$ injection time 5 seconds, sample delay 12 seconds, and total operation time 720 seconds
- 　O analysis: Reactor temperature 1060 °C, oven temperature 65 °C, He carrier gas flow rate 100 mL/min, He reference gas flow rate 100 mL/min, $O_2$ flow off, $O_2$ injection time 0 seconds, sample delay 0 seconds, total operation time 500 seconds

(3) Residual monomer content (wt%): After polymerization, each bead-shaped copolymer was dissolved in chloroform, and methanol was added to precipitate the polymer resin, and then a portion of the supernatant in which residual monomers were dissolved was taken as a sample, and the content of residual monomers of each sample was calculated using a gas chromatography device (Agilent 6890N (GC-FID) commercially available from Agilent Technologies, Inc.) under the following measurement conditions.

- 　Inlet: 280 °C, carrier gas He, and split ratio 10:1

- Column: HP-5 capillary column
- Flow rate: 1.4 mL/min
- Oven: Isothermal at 100 °C for 3 minutes, heated to 300 °C at a rate of 10 °C/min, isothermal at 300 °C for 5 minutes
- Detector: FID, 250 °C

(4) Transparency: The total light transmittance (Tt) of each prepared copolymer was measured using a haze meter and marked as ○ when the total light transmittance was 90 or more and X when the total light transmittance was less than 90.

[Table 1]

|  | Residual monomer (wt%) | Compositional variation | Tg (°C) | [(Tg)-100]/[-$W_l$] | Transparency (Tt) |
|---|---|---|---|---|---|
| Example 1 | 0.6 | 0.44 | 115.7 | 3.14 | ○ |
| Example 2 | 0.8 | 0.39 | 114.5 | 2.90 | ○ |
| Example 3 | 1.0 | 0.64 | 114.8 | 2.96 | ○ |
| Example 4 | 0.7 | 0.93 | 124.6 | 3.08 | ○ |
| Example 5 | 0.8 | 1.42 | 132.1 | 2.47 | ○ |
| Comparative Example 1 | 0.5 | - | 105.2 | - | ○ |
| Comparative Example 2 | 0.9 | - | 108.4 | - | X |
| Comparative Example 3 | 1.4 | 4.23 | 113.2 | 2.64 | X |
| Comparative Example 4 | 1.8 | 4.40 | 137.9 | 1.90 | X |
| Comparative Example 5 | 8.9 | 3.6 | 125.6 | 5.12 | X |
| Comparative Example 6 | 21.8 | 4.7 | 122.1 | 4.42 | X |

As shown in Table 1, it was confirmed that when the method of preparing a copolymer according to the present invention was applied, there was almost no compositional variation, and the residual monomer content was low (1.0 wt% or less), and an appropriate glass transition temperature relative to the content of imide-based monomer resulted in excellent heat resistance, and the efficiency was excellent by realizing an optimal glass transition temperature through an optimal imide-based monomer amount, and transparency was also secured.

On the other hand, it can be seen that Comparative Examples 1 and 2, in which imide-based monomers were not added, had a low residual monomer content, but heat resistance was not secured due to the low glass transition temperature. Comparative Example 3, in which an imide-based monomer was added but not added during polymerization, had a low glass transition temperature compared to Examples, in which the same amount of imide-based monomers was added, and the residual monomer content of Comparative Example 3 was greater than 1.0 wt%, and it was confirmed that an opaque copolymer was prepared. In addition, it can be seen that Comparative Example 4, which attempted to increase the glass transition temperature by adding an excess amount of imide-based monomer, had problems with transparency and a significant compositional variation among monomers by not applying the addition method.

It can be seen that Comparative Examples 5 and 6, in which the value of [(Tg)-100]/[$W_l$] exceeded 4.2, had a problem with transparency and a significant compositional variation.

From these results, it is confirmed that when the preparation method of the present invention is not used, there are problems such as a significant compositional variation and poor transparency even when the amount of imide-based monomers is increased to realize the optimal glass transition temperature.

**Claims**

1. An acrylic-imide copolymer comprising: an alkyl (meth)acrylate-based monomer unit; an aromatic vinyl-based monomer unit; and an imide-based monomer unit,

wherein the copolymer includes a plurality of copolymer chains,

a glass transition temperature is 109 °C to 133 °C,
the imide-based monomer unit is included in an amount of 20 parts by weight or less based on 100 parts by weight of an entire copolymer, and
a residual monomer content in the copolymer is 1.3 wt% or less.

2. The copolymer of claim 1, wherein the glass transition temperature is 111 °C to 128 °C.

3. The copolymer of claim 1, wherein the residual monomer content in the copolymer is 1.0 wt% or less.

4. The copolymer of claim 1, further comprising a vinyl cyanide-based monomer unit.

5. The copolymer of claim 1, comprising:

40 parts by weight to 90 parts by weight of the alkyl (meth)acrylate-based monomer unit;
5 parts by weight to 50 parts by weight of the aromatic vinyl-based monomer unit; and
1 part by weight to 20 parts by weight of the imide-based monomer unit, based on 100 parts by weight of the copolymer.

6. An acrylic-imide copolymer comprising: an alkyl (meth)acrylate-based monomer unit; an aromatic vinyl-based monomer unit; and an imide-based monomer unit,

wherein the copolymer includes a plurality of copolymer chains, and
when the alkyl (meth)acrylate-based monomer unit is included in an amount of 45 parts by weight or more based on 100 parts by weight of an entire copolymer, a glass transition temperature and an amount of the imide-based monomer unit satisfy Mathematical Expression 1 below:

[Mathematical Expression 1]

$$2.0 \leq [(Tg) - 100] / [W_I] \leq 4.2$$

where Tg is a unitless number of glass transition temperature when the unit is degrees Celsius (°C), and $W_I$ is a unitless number of the imide-based monomer unit content based on 100 parts by weight (or wt%) of an entire copolymer when the unit is part(s) by weight (or wt%).

7. The copolymer of claim 6, wherein a compositional variation between the plurality of copolymer chains is 3.50 or less.

8. The copolymer of claim 6, wherein the glass transition temperature is 109 °C to 133 °C.

9. A thermoplastic resin composition comprising the acrylic-imide copolymer of claim 1 or 6 and a thermoplastic resin.

## INTERNATIONAL SEARCH REPORT

| International application No. |
|---|
| **PCT/KR2023/016679** |

| A. | CLASSIFICATION OF SUBJECT MATTER |
|---|---|

**C08F 220/18**(2006.01)i; **C08F 220/44**(2006.01)i; **C08F 212/08**(2006.01)i; **C08L 33/06**(2006.01)i; **C08L 101/00**(2006.01)i

According to International Patent Classification (IPC) or to both national classification and IPC

| B. | FIELDS SEARCHED |
|---|---|

Minimum documentation searched (classification system followed by classification symbols)

C08F 220/18(2006.01); B29C 71/04(2006.01); B32B 7/12(2006.01); C08F 2/04(2006.01); C08F 2/18(2006.01); C08F 265/04(2006.01); C08J 5/18(2006.01); C08L 33/06(2006.01); C08L 55/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 아크릴-이미드계 공중합체(acryl-imide copolymer), 스티렌 단량체(styrene monomer), 잔류 단량체(residual monomer), 유리전이온도(transition temperature)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | EP 4056649 A1 (LG CHEM, LTD.) 14 September 2022 (2022-09-14)<br>See paragraphs [0131], [0134] and [0135]; and table 1. | 1-9 |
| X | KR 10-2020-0065804 A (LG MMA CORP.) 09 June 2020 (2020-06-09)<br>See paragraphs [0047] and [0078]. | 1-5 |
| A | US 2016-0159995 A1 (RIKEN TECHNOS CORPORATION) 09 June 2016 (2016-06-09)<br>See entire document. | 1-9 |
| A | KR 10-2019-0042620 A (INEOS STYROLUTION GROUP GMBH) 24 April 2019 (2019-04-24)<br>See entire document. | 1-9 |
| A | KR 10-2016-0025494 A (NITTO DENKO CORPORATION) 08 March 2016 (2016-03-08)<br>See entire document. | 1-9 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 January 2024** | **25 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 613 787 A1

<table>
<tr><td colspan="2" align="center">INTERNATIONAL SEARCH REPORT<br>Information on patent family members</td><td colspan="2">International application No.<br><br>**PCT/KR2023/016679**</td></tr>
<tr><td align="center">Patent document<br>cited in search report</td><td align="center">Publication date<br>(day/month/year)</td><td align="center">Patent family member(s)</td><td align="center">Publication date<br>(day/month/year)</td></tr>
<tr><td>EP 4056649 A1</td><td>14 September 2022</td><td>CN 114829492 A</td><td>29 July 2022</td></tr>
<tr><td></td><td></td><td>EP 4056649 A4</td><td>26 July 2023</td></tr>
<tr><td></td><td></td><td>JP 2023-508272 A</td><td>02 March 2023</td></tr>
<tr><td></td><td></td><td>JP 7395751 B2</td><td>11 December 2023</td></tr>
<tr><td></td><td></td><td>KR 10-2022-0060981 A</td><td>12 May 2022</td></tr>
<tr><td></td><td></td><td>TW 202219081 A</td><td>16 May 2022</td></tr>
<tr><td></td><td></td><td>US 2023-0109397 A1</td><td>06 April 2023</td></tr>
<tr><td></td><td></td><td>WO 2022-097867 A1</td><td>12 May 2022</td></tr>
<tr><td>KR 10-2020-0065804 A</td><td>09 June 2020</td><td>KR 10-2126206 B1</td><td>24 June 2020</td></tr>
<tr><td>US 2016-0159995 A1</td><td>09 June 2016</td><td>CN 105451964 A</td><td>30 March 2016</td></tr>
<tr><td></td><td></td><td>CN 105451964 B</td><td>08 March 2019</td></tr>
<tr><td></td><td></td><td>JP 2015-033844 A</td><td>19 February 2015</td></tr>
<tr><td></td><td></td><td>JP 2015-033851 A</td><td>19 February 2015</td></tr>
<tr><td></td><td></td><td>JP 2015-034285 A</td><td>19 February 2015</td></tr>
<tr><td></td><td></td><td>JP 2015-034286 A</td><td>19 February 2015</td></tr>
<tr><td></td><td></td><td>JP 5865953 B2</td><td>17 February 2016</td></tr>
<tr><td></td><td></td><td>JP 5989033 B2</td><td>07 September 2016</td></tr>
<tr><td></td><td></td><td>JP 5999818 B2</td><td>28 September 2016</td></tr>
<tr><td></td><td></td><td>JP 6395478 B2</td><td>26 September 2018</td></tr>
<tr><td></td><td></td><td>KR 10-2016-0030117 A</td><td>16 March 2016</td></tr>
<tr><td></td><td></td><td>KR 10-2203605 B1</td><td>14 January 2021</td></tr>
<tr><td></td><td></td><td>TW 201504320 A</td><td>01 February 2015</td></tr>
<tr><td></td><td></td><td>TW I627216 B</td><td>21 June 2018</td></tr>
<tr><td></td><td></td><td>US 10450431 B2</td><td>22 October 2019</td></tr>
<tr><td></td><td></td><td>WO 2015-005049 A1</td><td>15 January 2015</td></tr>
<tr><td>KR 10-2019-0042620 A</td><td>24 April 2019</td><td>EP 3500606 A1</td><td>26 June 2019</td></tr>
<tr><td></td><td></td><td>EP 3500606 B1</td><td>05 August 2020</td></tr>
<tr><td></td><td></td><td>KR 10-2357615 B1</td><td>03 February 2022</td></tr>
<tr><td></td><td></td><td>US 10858470 B2</td><td>08 December 2020</td></tr>
<tr><td></td><td></td><td>US 2019-0211128 A1</td><td>11 July 2019</td></tr>
<tr><td></td><td></td><td>WO 2018-033445 A1</td><td>22 February 2018</td></tr>
<tr><td>KR 10-2016-0025494 A</td><td>08 March 2016</td><td>JP 2015-028138 A</td><td>12 February 2015</td></tr>
<tr><td></td><td></td><td>JP 2015-071740 A</td><td>16 April 2015</td></tr>
<tr><td></td><td></td><td>JP 2015-145491 A</td><td>13 August 2015</td></tr>
<tr><td></td><td></td><td>JP 2015-146013 A</td><td>13 August 2015</td></tr>
<tr><td></td><td></td><td>JP 6363410 B2</td><td>25 July 2018</td></tr>
<tr><td></td><td></td><td>JP 6472172 B2</td><td>20 February 2019</td></tr>
<tr><td></td><td></td><td>JP 6505383 B2</td><td>24 April 2019</td></tr>
<tr><td></td><td></td><td>JP 6522289 B2</td><td>29 May 2019</td></tr>
<tr><td></td><td></td><td>KR 10-2016-0025509 A</td><td>08 March 2016</td></tr>
<tr><td></td><td></td><td>KR 10-2016-0026894 A</td><td>09 March 2016</td></tr>
<tr><td></td><td></td><td>KR 10-2016-0027012 A</td><td>09 March 2016</td></tr>
<tr><td></td><td></td><td>KR 10-2206692 B1</td><td>22 January 2021</td></tr>
<tr><td></td><td></td><td>KR 10-2230320 B1</td><td>19 March 2021</td></tr>
<tr><td></td><td></td><td>KR 10-2250919 B1</td><td>11 May 2021</td></tr>
<tr><td></td><td></td><td>KR 10-2281964 B1</td><td>26 July 2021</td></tr>
<tr><td></td><td></td><td>US 10883022 B2</td><td>05 January 2021</td></tr>
<tr><td></td><td></td><td>US 2016-0130478 A1</td><td>12 May 2016</td></tr>
<tr><td></td><td></td><td>WO 2014-208550 A1</td><td>31 December 2014</td></tr>
</table>

Form PCT/ISA/210 (patent family annex) (July 2022)

**EP 4 613 787 A1**

**Patent documents cited in the description**

- KR 20220143361
- KR 20230142387
- KR 1739621 B1